# FASCICULE DE BREVET EUROPEEN

(11) **EP 1 732 241 B1**
(45) Date de publication et mention de la délivrance du brevet: **26.11.2008**
(21) Numéro de dépôt: 05291515.4
(22) Date de dépôt: 13.07.2005
(51) Int. Cl.: H04B 3/32, G06F 5/06

(54) **Système et procédé de transmission de données dans un circuit électronique**
Datenübertrasgungssystem und -Verfahren in einer elektronischen Schaltung
System and method of conveying data in an electronic circuit

(30) Priorité: 10.06.2005 FR 0505896
(43) Date de publication de la demande: 13.12.2006
(73) Titulaire: ARTERIS, 78280 Guyancourt (FR)
(72) Inventeur: Montperrus, Luc, 78180 Montigny le Bretonneux (FR)
(74) Mandataire: Casalonga, Axel

(56) Documents cités:
- EP-A- 0 977 109
- GB-A- 545 313
- US-B1- 6 661 303

## Description

La présente invention concerne un système et un procédé de transmission de données dans un circuit électronique, et plus particulièrement dans les circuits électroniques de type localement synchrone et globalement asynchrone.

Des données sont transférées d'un bloc synchrone à un autre bloc synchrone. Chaque bloc synchrone est cadencé par sa propre horloge, de fréquence déterminée. Pour deux blocs synchrones entre lesquels des données sont transmises, les fréquences des horloges respectives peuvent être identiques ou non, mais n'ont pas de relation de phase. En d'autres termes les fréquences de ces horloges ne sont pas en phase.

Une manière de réaliser une connexion entre deux blocs synchrones est d'utiliser une liaison mésochrone, puis de faire un changement de domaine d'horloge à l'aide d'une file asynchrone de type FIFO ("First In First Out" en langue anglaise). Une liaison mésochrone est une liaison de transmission de données qui garantit une fréquence de transfert de données sans imposer de relation de phase entre l'émission et la réception. Pour cela, on utilise un ensemble de lignes de transmission, par exemple un bus de communication unidirectionnel point à point, entre un élément émetteur et un élément récepteur pour transmettre des données. Ces données comprennent des données représentatives de l'horloge d'émission pour synchroniser les données à la réception.

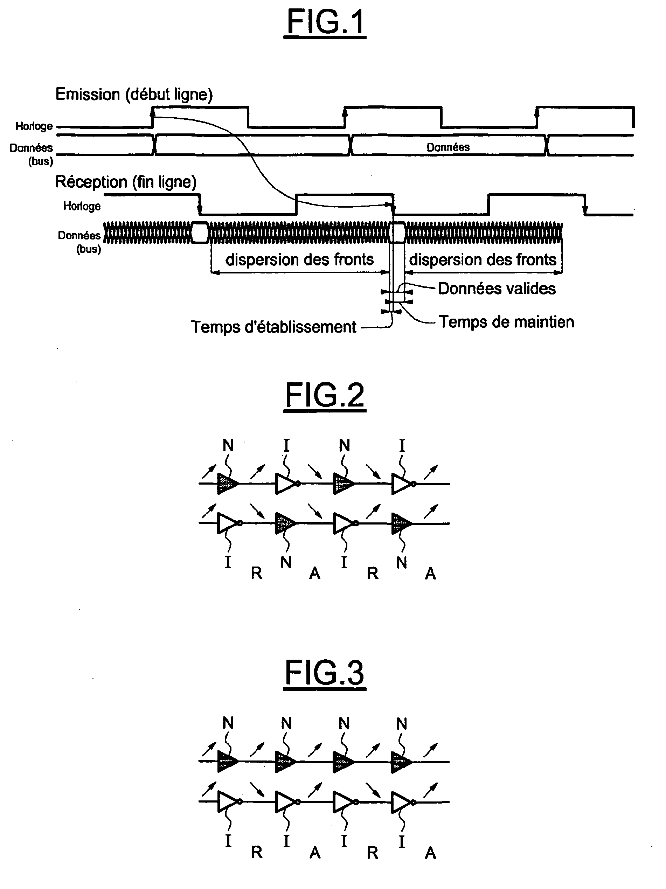

Les données sont émises sur un front de l'horloge lors de l'émission desdites données, et sont échantillonnées sur le front inverse à la réception, comme cela est illustré sur la figure 1. Tant que la dispersion des données due aux perturbations externes ou à la diaphonie interne aux lignes de transmissions ne dépasse pas une demi-période de l'horloge, les données reçues peuvent toujours être à nouveau synchronisées.

Plusieurs cycles d'horloge peuvent s'écouler entre le moment
où une donnée est émise et le moment où elle est échantillonnée à la réception. Il peut donc y avoir plusieurs données sur une même ligne de transmission à un instant donné, à condition que les données restent espacées dans la ligne de transmission.

Au cours de la transmission des données, les fronts de commutation des données se dispersent autour d'une position moyenne correspondant au front d'émission de l'horloge. Il doit rester un intervalle de temps dans lequel les données sont stables, ce qui est une garantie pour que deux paquets de données ne se mélangent pas lors de la transmission. Le temps d'établissement de la donnée ("set-up time" en langue anglaise) et le temps de maintien de la donnée ("hold time" en langue anglaise) à la réception doivent être inclus dans cet intervalle de temps. Sur un ensemble de lignes de transmission de données, on cherche à transmettre le maximum d'information, afin de rentabiliser au maximum le coût de l'ensemble des lignes de transmission.

Le temps d'établissement de la donnée représente la durée minimale pendant laquelle les données doivent être stables avant le front actif de l'horloge. Le temps de maintien de la donnée représente le temps minimal pendant lequel la donnée présente sur l'entrée doit rester stable sur le front actif de l'horloge pour que cette donnée soit reconnue.

La réalisation d'un ensemble de lignes de transmission point à point, par exemple un bus point à point, sur une puce électronique, nécessite l'utilisation de routeurs ou élément de réalisation. Ces routeurs permettent de réaliser des connexions métalliques utilisant plusieurs niveaux de métal, et d'insérer dans de telles connexions des répéteurs servant à régénérer les pentes des signaux. Ces répéteurs permettent de minimiser la dégradation des signaux lors de leur transmission dans des fils métalliques, ainsi que de minimiser les perturbations liées aux couplages capacitifs d'un fil avec les autres fils.

Pour un fil isolé, s'il n'y a pas assez de répéteurs, les réseaux RC, représentant la résistance et la capacité intrinsèque du fil, dégradent et retardent fortement le signal. En revanche, s'il y a trop de répéteurs, les délais des portes logiques deviennent trop importants. Il faut donc un équilibre entre la qualité du signal et les délais de portes introduits par les répéteurs. Aux alentours de cet optimum, la variation des délais de retard du signal transmis en fonction de la distance entre répéteurs est très faible, ce qui permet une grande latitude pour l'ajustement de cette distance.

Les répéteurs utilisés peuvent être avec ou sans inversion de phase. Les répéteurs sans inversion de phase ont généralement au moins deux couches logiques, ce qui ajoute une latence supplémentaire. Des répéteurs inverseurs doivent, quant à eux, être en nombre pair, sinon il faut prévoir une correction de la polarité du signal.

Pour des lignes de transmission fortement couplées avec les lignes voisines, il est préférable d'avoir un nombre important de répéteurs, et de trouver un compromis entre la latence et la diaphonie. La latence est souvent dégradée pour minimiser la diaphonie.

La diaphonie entre deux lignes de transmission comprenant un nombre de répéteurs élevé est importante si les fronts de commutation sont recouvrants, c'est-à-dire si les fronts de commutation des deux lignes se produisent de manière sensiblement simultanée. En effet, si les fronts de commutation respectifs des deux lignes sont décalés dans le temps, un front de commutation sur l'une produit un petit effet transitoire d'interférence sur l'autre, mais n'a pas d'influence directe sur une commutation ultérieure. Par contre, si les fronts de commutation respectifs des deux lignes sont simultanés, et que les transitions s'exercent dans le même sens, ces transitions vont s'accélérer mutuellement. A l'inverse, si les fronts de commutation respectifs des deux lignes sont simultanés, et que les transitions s'exercent dans des sens opposés, ces transitions vont se ralentir mutuellement.

Si l'on considère un ensemble de lignes de transmissions, par exemple un bus de données, le problème est plus complexe, car une ligne de transmission peut subir l'influence de ses lignes voisines immédiates ou premières voisines, mais également, dans une moindre mesure des autres lignes.

Des lignes de transmission de signaux qui ne commutent pas se comportent comme des pseudo-masses, et des groupes de lignes dont les signaux transmis commutent dans le même sens de manière synchrone ont des signaux d'autant plus accélérés qu'ils sont éloignés des lignes de bord du groupe, et que le nombre de lignes du groupe est important. De même, dans un groupe de lignes dont les signaux transmis par deux lignes voisines immédiates commutent dans des sens opposés de manière synchrone, les signaux transmis sont d'autant plus retardés qu'ils sont éloignés des lignes de bord du groupe et que le nombre de lignes du groupe est important.

Une analyse de la contribution de l'ensemble des lignes d'un bus conçu sur un niveau de métallisation aux interférences sur l'une de ses lignes de transmission, démontre que l'essentiel des perturbations est produites par les deux lignes voisines immédiates, les autres lignes ayant une contribution moindre.

L'évolution des techniques de gravure sur puce de silicium permettant des gravures de plus en plus fines, les problèmes de résistance et de couplage capacitif dans les interconnexions sont de plus en plus critiques. Il existe des solutions pour réduire ces perturbations et leurs effets indésirables, par exemple en augmentant la largeur des lignes de transmission pour diminuer leur résistance, et/ou en augmentant l'espacement entre les lignes de transmission pour diminuer le couplage capacitif.

Ces solutions sont cependant coûteuses, car elles augmentent la surface des circuits.

Il existe également des procédés de compensation de bruits ou interférences entre deux signaux par compensation d'un bruit généré entre deux répéteurs en inversant la phase de l'un des deux signaux sur le répéteur suivant. Deux signaux avec la même transition synchrone s'accélèrent, tandis que deux signaux avec des transitions synchrones de sens opposés se ralentissent.

Cependant, seules les perturbations des lignes voisines immédiates sont compensées, et, en conséquence, l'importance relative des autres lignes augmente. Leur effet apparaît alors comme non négligeable et n'est pas pris en compte. En outre, il n'est pas tenu compte du problème dans ses trois dimensions.

Aussi, selon un aspect de l'invention, il est proposé un système de transmission de données dans un circuit électronique, comprenant un ensemble de lignes de transmission de signal disposées sensiblement parallèlement les unes par rapport aux autres. Chaque ligne de transmission comprend des éléments de régénération de signal, inverseurs et non-inverseurs. Ledit ensemble de lignes de transmission comprend quatre sous-ensembles de lignes, et chacun desdits sous-ensembles comprend au moins une ligne de transmission munie d'un agencement périodique de dits éléments de régénération inverseurs et non-inverseurs. Lesdits éléments de régénération respectifs sont disposés dans des plans sensiblement perpendiculaires auxdites lignes de transmission. Quatre lignes de transmission consécutives ou voisines disposées à un même niveau appartiennent respectivement à un sous-ensemble distinct parmi lesdits sous-ensembles, et sont disposées dans un ordre constant. Une première ligne de transmission d'un premier desdits sous-ensembles comprend un agencement périodique d'éléments de régénération de signal inverseur, non-inverseur, non-inverseur, et inverseur. Une deuxième ligne de transmission d'un deuxième desdits sous-ensembles comprend un agencement périodique d'éléments de régénération de signal inverseur, inverseur, non-inverseur, et non-inverseur. Une troisième ligne de transmission d'un troisième desdits sous-ensembles comprend un agencement périodique d'éléments de régénération de signal non-inverseur, non-inverseur, inverseur, et inverseur. Une quatrième ligne de transmission d'un quatrième desdits sous-ensembles comprend un agencement périodique d'éléments de régénération de signal non-inverseur, inverseur, inverseur, et non-inverseur. Les éléments de régénération d'un agencement périodique étant sensiblement alignés

Un tel système permet de tenir compte des perturbations dues aux lignes de transmission voisines immédiates, et en outre des perturbations dues aux lignes de transmission deuxièmes voisines. Chaque sous-ensemble comprend des lignes de transmission munies d'un même agencement périodique d'éléments de régénération de signal.

En outre, deux éléments de régénération de signal successifs d'une ligne de transmission sont espacés d'une distance sensiblement constante.

Pour un domaine de telle précision, une distance sensiblement constante signifie constante à maximum 20% près.

Dans un mode de réalisation préféré, lesdits agencements périodiques respectifs desdites quatre lignes de transmission comprennent, en outre, au moins un ensemble d'éléments de régénération inverseurs intercalés dans chaque ligne à une même position relative, lesdits éléments de régénération inverseurs intercalés d'un ensemble étant sensiblement alignés.

Dans un tel cas, la latence de transmission des données est réduite.

Dans un premier mode de réalisation avantageux, ladite première ligne de transmission est voisine immédiate de ladite deuxième ligne de transmission, ladite deuxième ligne de transmission est voisine immédiate de ladite troisième ligne de transmission, et ladite troisième ligne de transmission est voisine immédiate de ladite quatrième ligne de transmission.

Dans un deuxième mode de réalisation avantageux, ladite première ligne de transmission est voisine immédiate de ladite quatrième ligne de transmission, ladite quatrième ligne de transmission est voisine immédiate de ladite troisième ligne de transmission, et ladite troisième ligne de transmission est voisine immédiate de ladite deuxième ligne de transmission.

Ces deux ordres répétitifs donnent les meilleurs résultats, dus à l'enchaînement alterné de phases d'accélération et de ralentissement du signal.

Avantageusement, deux lignes de transmission d'un même sous-ensemble, situées dans deux niveaux de métallisation consécutifs, sont décalées l'une par rapport à l'autre.

Il est alors tenu compte des perturbations dans les trois dimensions.

Dans un premier exemple, lesdites première, deuxième, troisième et quatrième lignes de transmission appartenant respectivement au premier, deuxième, troisième et quatrième sous-ensemble, et étant disposées dans un premier niveau de métallisation, sont respectivement superposées à quatre autres lignes de transmission, d'un niveau de métallisation consécutif audit premier niveau de métallisation, lesdites quatre autres lignes de transmission appartenant respectivement au troisième, quatrième, premier et deuxième sous-ensemble.

Dans un deuxième exemple, lesdites première, deuxième, troisième et quatrième lignes de transmission appartenant respectivement au premier, quatrième, troisième et deuxième sous-ensemble, et étant disposées dans un premier niveau de métallisation, sont respectivement superposées à quatre autres lignes de transmission, d'un niveau de métallisation consécutif audit premier niveau de métallisation, lesdites quatre autres lignes de transmission appartenant respectivement au troisième, deuxième, premier et quatrième sous-ensemble.

Les perturbations entre lignes de transmissions de niveaux de métallisation différents sont alors minimisées, car la distance entre deux lignes d'un même sous-ensemble appartenant à deux niveaux de métallisation distincts séparés par un niveau de métallisation intermédiaire est optimisée.

En outre, les lignes de bord sont des lignes de masse.

Ces lignes de masse permettent d'isoler l'ensemble des lignes de transmission des influences externes.

Dans un mode de réalisation préféré, le système comprend une ligne de transmission d'un signal d'horloge. En d'autres termes, il existe une ligne de transmission du signal d'horloge.

Dans un premier mode de réalisation avantageux, le système comprend des moyens de traitement adaptés pour émettre des données transmises par une ligne de transmission, différente de ladite ligne de transmission du signal d'horloge, sur un front constant dudit signal d'horloge, et adaptés pour échantillonner lesdites données sur le front constant opposé dudit signal d'horloge.

Le front constant est, par exemple, le front montant du signal d'horloge.

Par exemple, ladite ligne de transmission du signal d'horloge est voisine immédiate d'une desdites lignes de masse, ladite ligne de transmission du signal d'horloge pouvant, en outre, être voisine immédiate d'une ligne se comportant en pseudo-masse.

Le signal d'horloge est alors centré sur l'intervalle de temps comprenant le temps d'établissement additionné au temps de maintien des données. La marge pour échantillonner des données est alors accrue.

Dans un deuxième mode de réalisation avantageux, le système comprend des moyens de traitement adaptés pour émettre des données transmises par une ligne de transmission, différente de ladite ligne de transmission du signal d'horloge, et pour échantillonner lesdites données sur un même type de front, montant ou descendant, que le front d'émission. Ladite ligne de transmission du signal d'horloge comprend deux lignes voisines immédiates transmettant chacune un signal commandé par des moyens de commande, chacun des deux dits signaux commandés étant configuré pour commuter inversement et en phase avec ledit signal d'horloge ou pour ne pas commuter.

Il est alors possible d'imposer un retard sur le signal d'horloge plus important que le plus grand retard sur les données transmises et ainsi on utilise de la logique sur un seul front, ce qui simplifie les tests et permet d'optimiser les temps de latence.

Avantageusement, les deux dites lignes voisines immédiates ont chacune une autre ligne voisine immédiate, différente de la ligne de transmission du signal d'horloge et deuxième voisine de ladite ligne de transmission du signal d'horloge, transmettant chacune un signal statique représentatif de la valeur d'un bit de mode permettant de déterminer ledit signal commandé transmis respectivement par les lignes voisines immédiates de la ligne de transmission du signal d'horloge.

Ces bits de mode décodés à chaque élément de régénération du signal, par exemple un répéteur, servent à déterminer la présence ou l'absence de commutations sur les deux lignes voisines immédiates de la ligne de transmission du signal d'horloge, et servent de pseudo-masses.

Dans un mode de réalisation préféré, les données transmises par lesdites lignes de transmission sont émises sur les fronts montants et descendants du signal d'horloge, des données émises sur un front montant du signal d'horloge étant échantillonnées sur un front montant du signal d'horloge, et des données émises sur un front descendant du signal d'horloge étant échantillonnées sur un front descendant du signal d'horloge.

Cela permet de doubler le débit de transmission des données, sans augmenter la fréquence d'horloge.

Avantageusement, lesdits moyens de traitement sont adaptés pour émettre des données transmises respectivement par deux lignes de transmission voisines immédiates, différentes de ladite ligne de transmission du signal d'horloge, respectivement sur les fronts montants dudit signal d'horloge pour la première desdites deux lignes de transmission et sur les fronts descendants dudit signal d'horloge pour la deuxième desdites deux lignes de transmission. Les moyens de traitement sont également adaptés pour échantillonner respectivement lesdites données sur les fronts descendants dudit signal d'horloge pour la première desdites deux lignes de transmission et sur les fronts montants dudit signal d'horloge pour la deuxième desdites deux lignes de transmission.

Selon un autre aspect de l'invention, il est également proposé un procédé de transmission de données dans un circuit électronique, comprenant un ensemble de lignes de transmission de signal disposées sensiblement parallèlement les unes par rapport aux autres. Chaque ligne de transmission comprend des éléments de régénération de signal, inverseurs et non-inverseurs. On répartit ledit ensemble de lignes de transmission en quatre sous-ensembles de lignes, et on affecte au moins une ligne de transmission munie d'un agencement périodique de dits éléments de régénération inverseurs et non-inverseurs à chacun desdits sous-ensembles. On dispose lesdits éléments de régénération respectifs dans des plans sensiblement perpendiculaires auxdites lignes de transmission, et on dispose dans un ordre constant, à un même niveau, quatre lignes de transmission consécutives appartenant respectivement à un sous-ensemble distinct parmi lesdits sous-ensembles. On agence périodiquement, sur une première ligne de transmission d'un premier desdits sous-ensembles, des éléments de régénération de signal inverseur, non-inverseur, non-inverseur, et inverseur. On agence périodiquement, sur une deuxième ligne de transmission d'un deuxième desdits sous-ensembles, des éléments de régénération de signal inverseur, inverseur, non-inverseur, et non-inverseur. On agence périodiquement, sur une troisième ligne de transmission d'un troisième desdits sous-ensembles, des éléments de régénération de signal non-inverseur, non-inverseur, inverseur, et inverseur. On agence périodiquement, sur une quatrième ligne de transmission d'un quatrième desdits sous-ensembles des éléments de régénération de signal non-inverseur, inverseur, inverseur, non-inverseur, et on aligne sensiblement lesdits éléments de régénération d'un agencement périodique.

D'autres buts, caractéristiques et avantages de l'invention apparaîtront à la lecture de la description suivante, donnée à titre d'exemple non limitatif, et faite en référence aux dessins annexés sur lesquels :
la figure 1 est une vue schématique d'une émission de données sur un front montant de signal d'horloge avec échantillonnage des données en réception sur le front descendant dudit signal d'horloge ;
les figures 2 et 3 sont des vues schématiques de réalisations permettant de compenser les bruits des lignes voisines immédiates d'un ensemble de lignes de transmission ;
la figure 4 est une vue schématique d'un circuit à plusieurs niveaux de métallisation selon un aspect de l'invention ;
la figure 5 est une vue schématique d'un mode de réalisation d'un système selon un aspect de l'invention ;
les figures 6 à 11 illustrent différents cas de couples de lignes voisines immédiates;
les figures 12 et 13 sont des vues schématiques de modes de réalisation optimum d'un système selon un aspect de l'invention ;
la figure 14 est une vue schématique d'un mode de réalisation semblable à celui de la figure 12, comprenant des éléments inverseurs supplémentaires de régénération de signal ;
la figure 15 est une vue schématique d'un circuit à plusieurs niveaux de métallisation selon un aspect de l'invention ;
Les figures 16 et 17 illustrent le positionnement de deux niveaux consécutifs ayant respectivement le même motif que celui des figures 12 et 13 ;
les figures 18 et 19 illustrent trois lignes de transmissions voisines ;
la figure 20 est une vue schématique d'un circuit à plusieurs niveaux de métallisation selon un aspect de l'invention ;
la figure 21 est une vue schématique d'un mode de réalisation de l'invention comprenant deux bits statiques de mode transmis sur les lignes voisines immédiates des lignes voisines immédiates de la ligne de transmission du signal d'horloge ;
les figures 22 et 23 illustrent un mode de réalisation selon un aspect de l'invention, dans lequel des données sont émises sur les fronts montants et descendants du signal d'horloge ; et
la figure 24 illustre un mode de mise en oeuvre du procédé selon un aspect de l'invention.

La figure 1 illustre une transmission de données sur un bus de communication unidirectionel. Le signal d'horloge à l'émission en début de ligne est représenté, ainsi que le signal d'horloge en réception en fin de ligne. Les données sont émises sur des fronts montants du signal d'horloge et échantillonnées en réception sur des fronts descendants du signal d'horloge. Au cours de la transmission des données, les données transmises se dispersent autour d'une position moyenne correspondant au front d'émission de l'horloge, ici le front montant.

Les figures 2 et 3 représentent deux motifs permettant de compenser les bruits des lignes de transmissions voisines immédiates.

Sur la figure 2, deux lignes de transmissions voisines immédiates d'un même niveau sont représentées. Les répéteurs sont régulièrement espacés et situés à des abscisses respectives identiques. La première ligne comprend un enchaînement répétitif de répéteur non-inverseur N, répéteur inverseur I, répéteur non-inverseur N, et répéteur inverseur I. En correspondance, la deuxième ligne comprend un enchaînement répétitif de répéteur inverseur I, répéteur non-inverseur N, répéteur inverseur I, et répéteur non-inverseur N.

L'exemple représenté comprend deux transitions montantes initiales. On a alors une phase de ralentissement R du signal suivie d'une phase d'accélération A du signal, suivie d'une phase de ralentissement R du signal, et suivie d'une phase d'accélération du signal A. En fin de compte, le bruit dû aux lignes voisines immédiates est compensé.

Sur la figure 3, deux lignes de transmissions voisines immédiates d'un même niveau sont représentées. Les répéteurs sont régulièrement espacés et situés à des abscisses respectives identiques. La première ligne comprend un enchaînement répétitif de répéteurs non-inverseurs N. En correspondance, la deuxième ligne comprend un enchaînement répétitif de répéteurs inverseurs I.

L'exemple représenté comprend deux transitions montantes initiales. On a alors une phase de ralentissement R du signal suivie d'une phase d'accélération A du signal, suivie d'une phase de ralentissement R du signal, et suivie d'une phase d'accélération du signal A. En fin de compte, le bruit dû aux lignes voisines immédiates est compensé.

Sur les figures 2 et 3, on a illustré le cas de deux transitions fronts montants. Bien entendu tous les autres cas en découlent directement, car l'inversion d'un des signaux d'entrée inverse tous les signaux de la ligne de transmission correspondante, et donc inverse les sections d'accélération et de ralentissement.

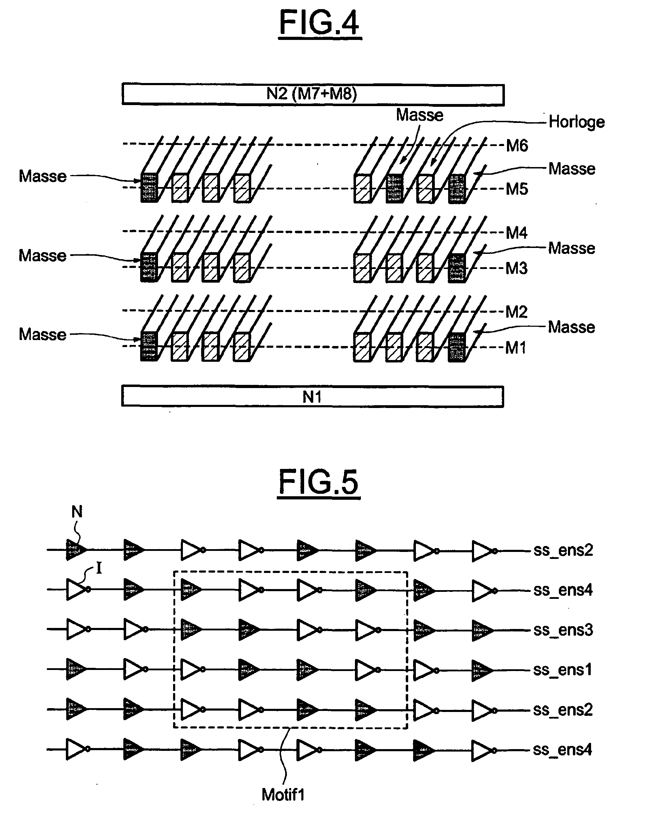

Un exemple de circuits intégrés utilisé pour mettre en oeuvre l'invention est représenté sur la figure 4.

Dans les exemples qui suivent, les circuits intégrés comprennent huit niveaux de métallisation M1, M2, M3, M4, M5, M6, M7 et M8, dont deux niveaux M7 et M8 sont des niveaux généralement réservés pour un plan complet d'alimentation et de masse, représentés dans une couche N2. Le plan de masse N1 constitué par le substrat est également représenté. En réalité, les répéteurs se trouvent dans le plan de masse N1.

Les niveaux de métallisation dans un circuit sont dans des plans sensiblement parallèles, qu'on a arbitrairement choisi de représenter horizontaux. Une connexion courte verticale entre deux niveaux de métallisation horizontaux est appelé un via.

Dans les exemples décrits, les niveaux de métallisation impairs M1, M3 et M5 sont affectés à la réalisation de fils horizontaux d'un bus de transmission de données de même direction et les niveaux pairs M2, M4 et M6 à la réalisation des fils horizontaux perpendiculaires à la direction des fils horizontaux du bus.

Généralement, pour un niveau de métallisation donné, il existe un direction de routage privilégiée, en d'autres termes, pour un niveau de métallisation donné, les fils sont orientés quasi-exclusivement dans une seule direction. Pour une portion rectiligne d'un bus, on utilise les niveaux de métallisation possédant une direction privilégiée identique à celle de la portion rectiligne.

En d'autres termes, les niveaux de métallisation dans un circuit sont dans des plans parallèles que l'on choisit arbitrairement de représenter horizontaux. On passe verticalement d'un plan à l'autre par une courte métallisation verticale appelé via. Dans un plan de métallisation donné, de nombreux fils ont été générés grâce à des logiciels de routage. Ces fils générés par les routeurs utilisent deux directions perpendiculaires du plan de métallisation, pouvant arbitrairement être appelées gauche/droite et haut/bas, ce qui correspond à la représentation classique d'un routage dans deux dimensions. Pour des raisons d'efficacité, il est admis, que pour un niveau de métallisation, il existe une direction de routage privilégiée, c'est-à-dire que la majorité des fils ont des segments orientés presque exclusivement dans une seule direction gauche/droite ou haut/bas, et, généralement, la direction privilégiée d'un niveau sera orthogonale à celle des deux niveaux adjacents.

Les deux derniers niveaux sont plus épais et permettent de faire des connexions moins résistives. Cependant, ces niveaux étant plus épais, les connexions réalisées doivent être moins denses, avec des fils plus larges et plus espacés. Comme de tels fils coûtent plus cher, ils ne sont utilisés que pour des routages spéciaux comme les alimentations ou pour les fils conduisant des courant élevés. On considère donc dans les exemples décrits, que les deux derniers niveaux sont dédiés presque exclusivement aux plans d'alimentations ou de masses. On considère que le routage des bus s'effectue sur les niveaux restants. C'est dans les couches basses que l'on trouve les répéteurs servant à amplifier et régénérer les signaux dans les fils.

Sur l'exemple décrit, deux niveaux de métallisation consécutifs ont des lignes de transmission ayant des directions perpendiculaires.

Les interactions entre des lignes de transmission de directions perpendiculaires, situées dans deux niveaux de métallisation consécutifs, représentent une surface de couplage négligeable en comparaison avec la surface de couplage de deux fils parallèles sur une distance de plusieurs millimètres.

En effet, dans un bus, de nombreuses lignes de transmission sont parallèles sur une distance significative de plusieurs millimètres, ce qui crée une capacité de couplage, entre deux lignes parallèles, de plusieurs milliers de microns carrés, bien plus importante que la capacité de couplage entre deux lignes perpendiculaires.

Bien entendu, en variante, tous les niveaux métalliques peuvent avoir une même direction privilégiée.

Sur les niveaux de métallisation impairs sont représentées les lignes de transmission du bus de données. Sur cet exemple, des lignes, dont la section est grisée, servent de masses : Masse, et une ligne de transmission de données est utilisée pour transmettre le signal d'horloge : Horloge. Les autres lignes de transmission représentées servent à transmettre les données à transmettre sur le bus.

Les signaux du bus étant isolés latéralement, les seules perturbations à considérer sont alors les perturbations internes au bus, c'est-à-dire entre des signaux dont on peut prédire la localisation dans le temps et dans l'espace.

Les masses utilisées pour isoler les lignes de transmission du bus sont des fils ayant des caractéristiques géométriques similaires aux autres fils mais étant régulièrement connectées aux plans de masse N1, N2 pour minimiser la résistance à la masse.

Les niveaux métalliques sont saturés, on ne laisse pas de place pour le routage d'une ligne de transmission qui n'appartient pas au bus autrement que perpendiculairement à la direction du bus, ceci étant valable dans tout l'espace délimité par toutes les masses de blindage, et les plans de masse N1 et N2.

Le signal d'horloge est également protégé des influences latérales.

En effet, même si une perturbation peut être identique pour tous les signaux, elle affecte différemment le front du signal d'horloge servant à l'échantillonnage et les signaux de données, puisqu'il ne commute pas au même moment. Les perturbations internes au bus mettent en jeu les surfaces de couplage de l'ordre de dizaine de milliers de millimètres carrés, tandis qu'un fil perpendiculaire à une liaison représente une surface de couplage de moins d'un micromètre carré. Même la présence de dizaines de tels croisements est donc négligeable.

Les niveaux de métallisation intermédiaires M1, M2, M3, M4, M5, M6 comprennent chacun un ensemble de fils métalliques parallèles.

Sur la figure 5 est représenté un exemple de disposition de lignes de transmission d'un même niveau. Chaque ligne de transmission comprend des éléments de régénération de signal, inverseur I et non inverseur N. Les éléments de régénération respectifs sont disposés dans des plans sensiblement perpendiculaires aux lignes de transmission.

L'ensemble des lignes de transmission est réparti en quatre sous-ensembles ss_ens1, ss_ens2, ss_ens3, et ss_ens4 de lignes de transmission, chaque sous-ensemble comprenant des lignes de transmission ayant un même agencement périodique d'éléments de régénération de signal.

Quatre lignes de transmission voisines disposées à un même niveau appartiennent respectivement à un sous-ensemble distinct parmi les quatre sous-ensembles ss_ens1, ss_ens2, ss_ens3, et ss_ens4. Des lignes de transmission appartenant à un même niveau sont disposées dans un ordre constant. En d'autres termes, celles-ci sont disposées dans un ordre cyclique.

Une ligne de transmission du premier sous-ensemble ss_ens1 comprend un agencement périodique d'éléments de régénération de signal inverseur I, non-inverseur N, non-inverseur N, et inverseur I.

Une ligne de transmission du deuxième sous-ensemble ss_ens2 comprend un agencement périodique d'éléments de régénération de signal inverseur I, inverseur I, non-inverseur N, et non-inverseur N.

Une ligne de transmission du troisième sous-ensemble ss_ens3 comprend un agencement périodique d'éléments de régénération de signal non-inverseur N, non-inverseur N, inverseur I, et inverseur I.

Une ligne de transmission du quatrième sous-ensemble ss_ens4 comprend un agencement périodique d'éléments de régénération du signal non-inverseur N, inverseur I, inverseur I, et non-inverseur N.

Les éléments de régénération respectifs des différentes lignes de transmission sont respectivement alignés.

Le mode de réalisation de la figure 5 a pour ordre répétitif : une ligne de transmission du quatrième sous-ensemble ss_ens4, une ligne de transmission du troisième sous-ensemble ss_ens3, une ligne de transmission du premier sous-ensemble ss_ens1 et une ligne de transmission du deuxième sous-ensemble ss_ens2.

Le motif de base Motif1 est constitué de quatre sous-motifs qui sont les agencements périodiques des éléments de régénération de signal des lignes de transmission appartenant respectivement au quatrième, troisième, premier et deuxième sous-ensemble ss_ens1, ss_ens2, ss_ens3, et ss_ens4.

Des lignes de transmission d'un même niveau sont disposées dans un ordre constant, ou cyclique.

En variante, cet ordre de disposition peut être différent, mais reste un ordre constant.

Dans chacune des variantes, on obtient deux sections d'accélération et deux sections de ralentissement de signal.

En effet deux signaux voisins comprenant deux transitions de même sens simultanément s'accélèrent, tandis que deux signaux voisins comprenant deux transitions de sens inverse simultanément se ralentissent.

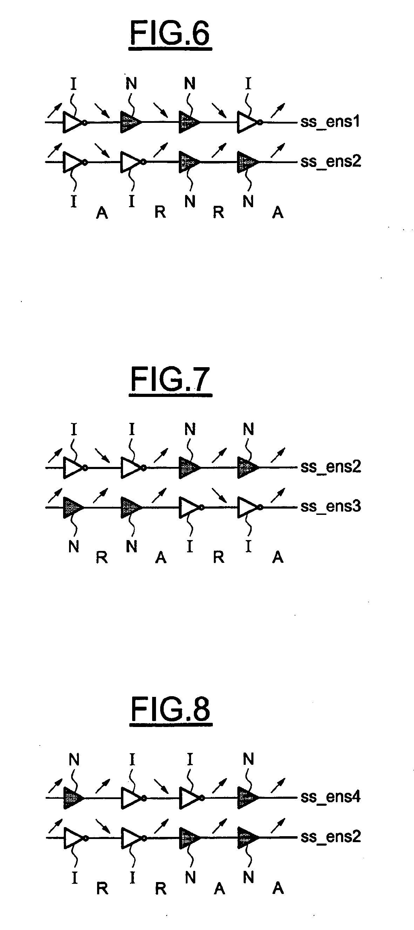

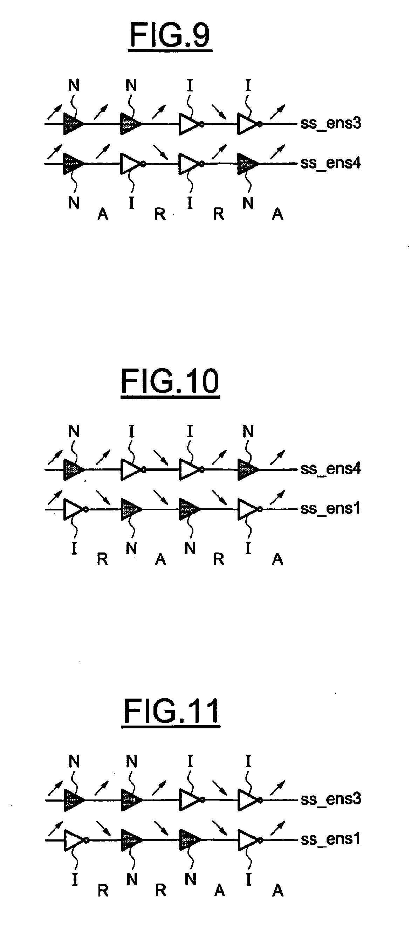

Comme illustré sur les figures 6 à 11, dans le cas de deux transitions fronts montants en entrée. Les figures 8 et 11 illustrent les lignes voisines immédiates pour lesquelles deux sections d'accélération A s'alternent avec deux sections de ralentissement R, et il faut éviter d'avoir ces cas. Cependant, même s'il faut éviter d'avoir une ligne de transmission du premier sous-ensemble ss_ens1 voisine immédiate d'une ligne de transmission du troisième sous-ensemble ss_ens3, et éviter d'avoir une ligne de transmission du deuxième sous-ensemble ss_ens2 voisine immédiate d'une ligne de transmission du quatrième sous-ensemble ss_ens4, ils peuvent toutefois être second voisins.

Pour un même niveau, garder un tel ordre constant de disposition des lignes de transmission, permet de compenser la diaphonie entre des lignes voisines immédiates ainsi qu'entre des lignes secondes voisines.

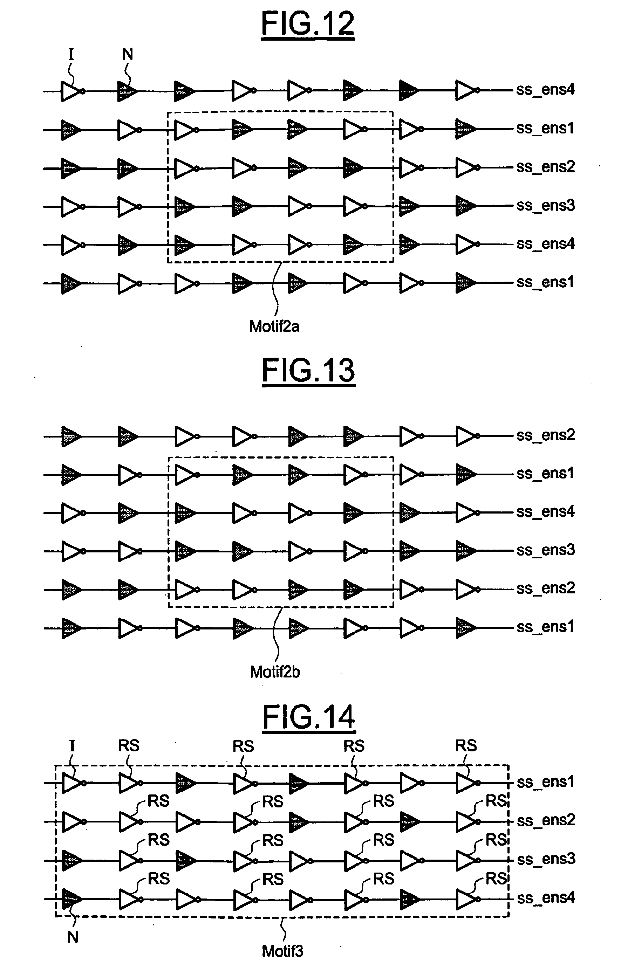

Au vu de ce qui précède, deux motifs préférés sont illustrés sur les figures 12 et 13.

La figure 12 illustre un mode de réalisation préféré, dans lequel ralentissements et accélérations se succèdent alternativement pour deux lignes voisines immédiates. Le motif de base Motif2a comprend un ordre répétitif d'une ligne de transmission du premier sous-ensemble ss_ens1, d'une ligne de transmission du deuxième sous-ensemble ss_ens2, d'une ligne de transmission du troisième sous-ensemble ss_ens3, et d'une ligne de transmission du quatrième sous-ensemble ss_ens4.

La figure 13 illustre un autre mode de réalisation préféré, dans lequel ralentissements et accélérations se succèdent alternativement pour deux lignes voisines immédiates. Le motif de base Motif2b comprend un ordre répétitif d'une ligne de transmission du premier sous-ensemble ss_ens1, d'une ligne de transmission du quatrième sous-ensemble ss_ens4, d'une ligne de transmission du troisième sous-ensemble ss_ens3, et d'une ligne de transmission du deuxième sous-ensemble ss_ens2.

Ces deux motifs évitent d'avoir une ligne de transmission du premier sous-ensemble ss_ens1 voisine immédiate d'une ligne de transmission du troisième sous-ensemble ss_ens3, et/ou d'avoir une ligne de transmission du deuxième sous-ensemble ss_ens2 voisine immédiate d'une ligne de transmission du quatrième sous-ensemble ss_ens4. Ainsi, les lignes voisines immédiates ont des sections d'accélérations et de ralentissement qui se compensent par alternance successive.

En variante, comme illustré sur la figure 14, des répéteurs inverseurs supplémentaires RS sont intercalés entre les éléments de régénération de signal, ou répéteurs, dans chaque ligne à une même position relative.

Le motif de base Motif3 illustré correspond à celui de la figure 12 (Motif 2a), dans lequel, entre deux répéteurs successifs, est intercalé un répéteur inverseur I. Bien sûr, ces répéteurs inverseurs peuvent ne pas être intercalés entre tous les répéteurs successifs de la figure 12. Cependant, lorsqu'on intercale un répéteur inverseur supplémentaire RS entre deux éléments de régénération de signal des lignes d'un sous-ensemble, on intercale également un répéteur inverseur supplémentaire RS entre les deux éléments respectifs de régénération de signal des lignes de transmission des autres sous-ensembles.

Cela permet de gagner en latence.

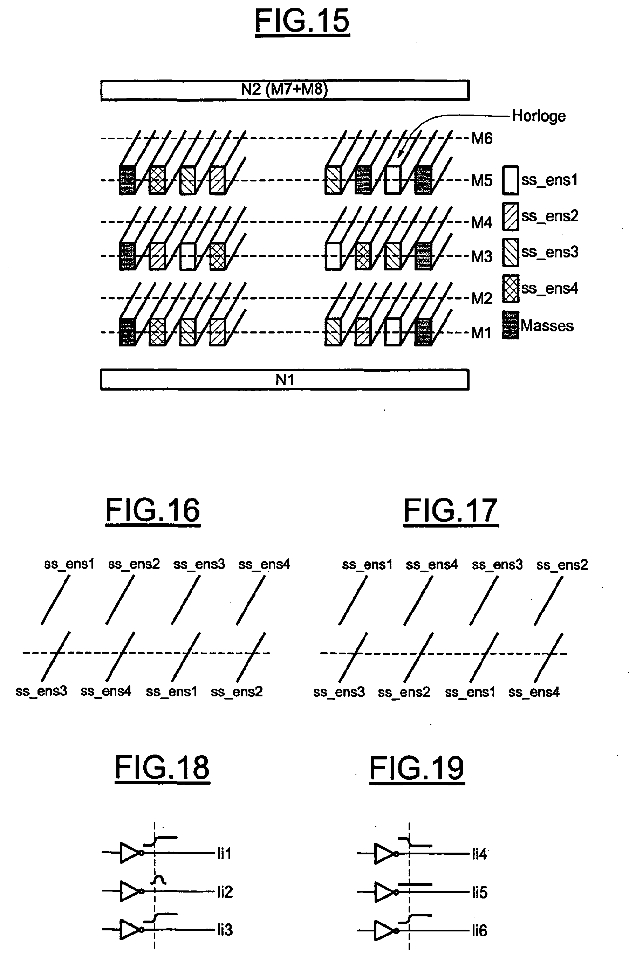

La figure 15 illustre un exemple de réalisation d'un système selon l'invention, en trois dimensions.

Sur un niveau de métallisation, on suit un ordre choisi, le motif Motif2a de préférence l'ordre optimal de la figure 12. Cet ordre est défini une fois pour toute, et est utilisé pour tous les niveaux de métallisation impairs.

En outre, pour deux niveaux de métallisation impairs successifs, les positions relatives de deux lignes appartenant à un même sous-ensemble sont décalées de deux positions, de sorte que deux lignes de transmission appartenant à un même sous-ensemble soient les plus éloignées possible l'une de l'autre. Ainsi, les rares lignes qui ne se compensent pas correspondent à des couplages très faibles. Le signal d'horloge est affecté à un de ces sous-ensembles en fonction de son emplacement. Une telle disposition est illustrée sur la figure 16.

En variante, sur la figure 17, on a illustré le cas dans lequel on choisit, sur un niveau de métallisation impair, le motif 2b de la figure 13.

Un tel dispositif permet, non seulement de réduire les interférences liées aux lignes voisines immédiates, mais également de réduire les interférences résiduelles dues aux lignes secondes voisines dans un niveau de métallisation.

Dans une direction verticale perpendiculaire à celle d'un niveau de métallisation, bien que les couplages restent relativement faibles, on réduit également les interférences sur la majorité des couplages dans cette direction.

Un signal transmis sur une ligne de transmission entourée de lignes premières voisines transmettant un signal qui ne commute pas, est accéléré par rapport à un signal d'horloge blindé. On entend par signal d'horloge blindé un signal d'horloge encadré par deux lignes de masse.

Une ligne transmettant un signal qui ne commute pas ne se comporte pas comme une vraie masse, mais comme une pseudo-masse, c'est-à-dire un fil qui ne commute pas, au moins quand il est nécessaire d'avoir un comportement de pseudo-masse. Ce fil, ayant sa propre résistance, est connecté à un répéteur ayant sa propre résistance interne, et à une distance éloignée du répéteur, la résistance de cette pseudo-masse, par rapport à la masse absolue, peut être relativement élevée.

Lorsqu'une telle pseudo-masse est entourée de deux fils qui commutent simultanément en sens opposés, comme le signal sur ce fil intermédiaire ne varie pas, cette pseudo-masse se comporte comme une vraie masse. Mais dans les autres cas, la pseudo-masse ralentit moins les signaux que ne le ferait une vraie masse, donc si l'on désire obtenir un temps moyen de transport du signal d'horloge, on utilisera au moins une pseudo-masse sur une ligne voisine de la ligne de transport du signal d'horloge, car entourer cette dernière de deux masses ralentirait trop le signal d'horloge, qui serait plus lent que la moyenne des signaux.

Sur la figure 18, sont représentées trois lignes de transmission voisines li1, li2 et li3 dont la ligne du milieu li2 transmet un signal qui ne commute pas. Dans le cas où les deux signaux transportés par les deux autres lignes li1 et li3 commutent dans le même sens au même instant, ils induisent un signal parasite sur la ligne du milieu li2. Ces deux signaux s'accélèrent donc même à travers la ligne de transmission intermédiaire li2 (effet de la ligne seconde voisine).

Par contre, comme illustré sur la figure 19, si deux signaux transmis par deux lignes li4 et li6 de transmission séparées par une ligne intermédiaire li5 transmettant un signal qui ne commute pas, commutent en sens inverse au même instant, la ligne intermédiaire li5 reste quasiment stable et se comporte alors comme une masse, et on a donc une séparation des signaux.

Lorsque des sections d'accélération et de séparation sont alternées, l'effet résultant est une légère accélération des signaux. On entend par section de séparation, une section sur laquelle une pseudo-masse se comporte comme une vrai masse.

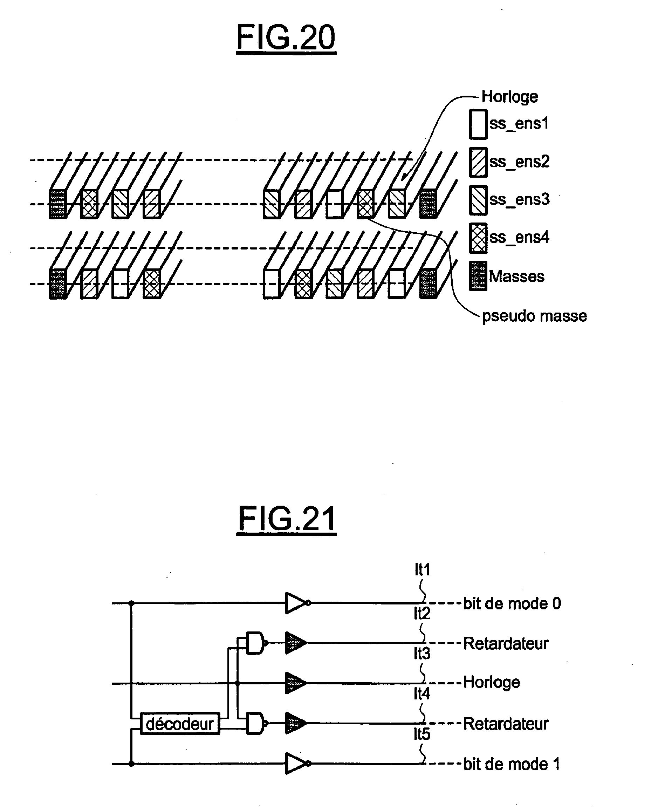

Comme en moyenne les signaux de données sont transmis plus rapidement que le signal d'horloge blindé, il faut accélérer la transmission du signal d'horloge. L'accélération de la transmission du signal d'horloge peut être effectuée soit en augmentant la distance entre la ligne de transmission du signal d'horloge et les lignes de transmission premières voisines transmettant les signaux de masse, soit en transmettant sur des lignes premières voisines de la ligne de transmission du signal d'horloge, des signaux qui ne commutent pas pendant la commutation du front d'échantillonnage. Or, dans le cas d'une liaison mésochrone, avec un front d'échantillonnage différent du front d'émission, le front d'échantillonnage "voyage seul". En d'autres termes, lorsque le front d'échantillonnage arrive à un endroit donné de la liaison, les fronts sur les données voisines sont déjà passés. Si l'on veut alors accélérer légèrement ce front, il suffit d'avoir une masse d'un côté du signal d'horloge et une donnée de l'autre qui va se comporter comme une pseudo-masse au moment du passage du front, comme cela est illustré sur la figure 20.

Lorsque l'on émet des données sur un front d'horloge et que l'on échantillonne ces données sur l'autre front en réception, on cherche à positionner le signal d'horloge de manière à centrer le front d'échantillonnage au milieu de la l'intervalle de stabilité des données (temps d'établissement + temps de maintien). Cela revient à centrer le front d'horloge correspondant à l'émission des données par rapport aux divers fronts de commutation des données à la fin de la transmission, c'est-à-dire que l'horloge doit avoir un temps de propagation aussi proche que possible de la moyenne des temps de propagation des données.

Dans le cas où tous les répéteurs sont identiques (pas de compensation de bruit) on peut montrer que le temps de propagation moyen correspond à peu près au temps de propagation d'une ligne encadrée par deux masses. Avec la compensation de bruit par les motifs décrits précédemment le comportement moyen des signaux tend à s'accélérer légèrement, donc il faut accélérer le front d'échantillonnage de l'horloge en conséquence, par exemple en plaçant la ligne de transmission de l'horloge à côté d'une ligne qui se comportera comme une pseudo-masse pour ce front.

Echantillonner les données en réception sur le front d'horloge inverse permet un ajustement du dispositif physique si les performances sont trop justes. En effet, en baissant légèrement la fréquence on peut relâcher les contraintes à la fois sur le temps d'établissement et sur le temps de maintien pour l'échantillonnage.

La diaphonie n'est pas la seule cause de dispersion des données, les écarts entre fils ou simplement les dispersions inhérentes au procédé de fabrication sont également en cause.

Cependant, la diaphonie reste la cause majeure et la moins prédictible de la dispersion des données. Le délai de propagation dans un fil métallique dépend de la distribution de sa résistance et sa capacité. La variation en température d'une résistance métallique étant presque deux fois plus faible que la variation en température de la résistance équivalente d'un transistor MOS, les délais dans les fils seront plus stables par rapport à la variation de température que les délais des portes MOS. De même, les variations relatives de géométries, comme des variations de largeurs de fils ou d'espacement de fils, sur des fils de grandes longueurs sont plus faibles que les variations relatives sur les transistors MOS que comprennent les répéteurs. Cela contribue aussi à rendre les délais de fils plus fiables.

En variante, les données sont échantillonées sur un même type de front que le front d'émission desdites données. On utilise alors une horloge retardée, et on a tout intérêt à utiliser un retard aussi proche que possible du retard sur la transmission des données. Pour les raisons évoquées précédemment un délai de porte seul ne conviendrait pas. Le délai doit comporter le même délai de porte que pour la transmission des données, et un délai de fil au moins équivalent au pire cas de diaphonie possible sur la transmission des données tout en tenant compte également de la compensation de bruit afin de ne pas être trop pessimiste.

La figure 21 illustre un dispositif d'ajustement du signal d'horloge dans lequel on ajoute au moins deux bits de programmation (bits de mode) du retard du signal d'horloge : ces bits sont positionnés à l'initialisation du circuit, et servent donc de pseudo-masse pour protéger le dispositif.

Ces bits de mode transmis sur les lignes lt1, lt5 décodés à chaque répéteur, servent à déterminer la présence ou l'absence de commutations des signaux transmis sur les deux lignes lt2, lt4 voisines immédiates de la ligne de transmission lt3 du signal d'horloge.

Sur chaque section, on peut choisir soit de blinder le signal d'horloge (pas de programmation), soit de l'entourer de deux signaux voisins qui ne commutent pas (faible accélération) soit d'utiliser une programmation du retard en commandant ou non une commutation de l'un ou des deux signaux voisins. Bien évidemment, la ligne de transmission du signal d'horloge lt3 garde le même nombre de répéteurs inverseurs I et de répéteurs non inverseurs N que les autres lignes de transmission, mais les lignes de transmission 1t2, lt4 voisines immédiates ont des transitions imposées.

Sur la figure 21, est représenté le cas d'une section programmable.

Sur cette section avec programmation, les retardateurs sont activés ou non selon le décodage des bits de mode ou bits de programmation. Le répéteur de la section de la ligne de transmission du signal d'horloge comprend un répéteur non-inverseur, et donc les lignes de transmission se comportant en retardateurs également.

Si la marge sur le délai de l'horloge par rapport aux données transmises est réglée au plus juste et si la dispersion sur les données est nettement plus faible que le demi-temps de cycle d'horloge, on peut utiliser les deux fronts et doubler le débit. Les données sont émises alternativement sur le front montant et sur le front descendant, les données émises sur le front montant étant échantillonnées sur le front montant et les données émises sur le front descendant étant échantillonnées sur le front descendant.

Il est également possible de décaler les fronts de commutation à l'aide de délais : lorsqu'on écarte des fronts de commutation, on passe d'abord par un maximum de perturbations sur les lignes voisines immédiates, puis lorsque les intervalles de transition sont disjoints, on obtient une perturbation minimum.

Dans le cas d'une liaison mésochrone, une augmentation de la latence pour pouvoir augmenter la fréquence de commutation est parfaitement envisageable. On peut donc écarter les fronts de transition entre les signes transmis par les lignes de transmission appartenant à deux sous-ensembles dont les lignes sont voisines immédiates. On sépare les lignes de transmission en deux groupes de lignes grp1, grp2 de manière à ce que deux lignes voisines immédiates d'un même niveau n'appartiennent pas au même groupe de lignes de transmission.

On écarte les transitions entre ces deux groupes grp1, grp2 de manière à être à la limite du recouvrement des périodes de transition des signaux des différents groupes. Le retard ajouté par exemple sur le premier groupe sera rajouté sur le second groupe avant l'échantillonnage. La latence est donc augmentée de la valeur du délai, mais la fréquence d'échantillonnage qui n'est fonction que de la dispersion des données dans chaque groupe est améliorée.

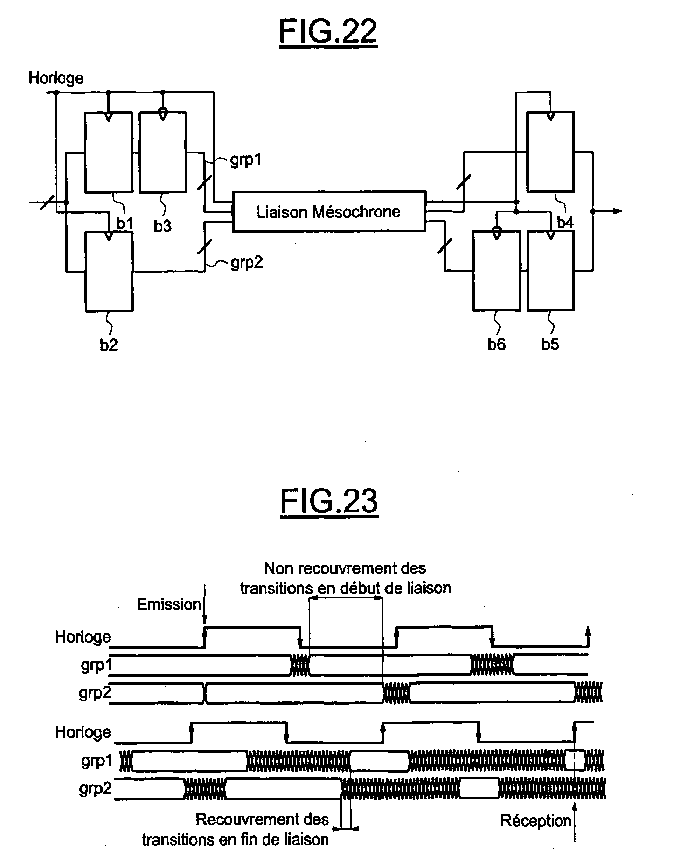

La figure 22 représente un dispositif n'utilisant pas de délai sur le signal d'horloge. La moitié des données grp1 est alors envoyée sur un front de l'horloge au moyen de la bascule b1, et l'autre moitié grp2 sur l'autre front au moyen de la bascule b2, chacune des moitiés des données étant échantillonnées sur le front inverse de celui de l'émission, comme illustrée sur la figure 23. Les données grp1 transmises sur front descendant ont un demi-cycle d'horloge de retard au départ dû à la bascule b3, et sont échantillonnées sur front montant à la réception, au moyen de la bascule b4. Les données grp2 transmises sur front montant sont échantillonnés sur front descendant au moyen d'une bascule b5 et retardées d'un demi-cycle d'horloge au moyen de la bascule b6 pour être alignées sur l'autre moitié des données grp1. Les problèmes de diaphonie sur les lignes de transmission secondes voisines sont réduits en utilisant un motif tel que décrit précédemment, par exemple un motif Motif2a ou Motif2b.

Il y a donc une compensation non seulement avec les lignes de transmission secondes voisines d'un même niveau, mais également une compensation avec lignes voisines les plus proches d'un niveau de métallisation comprenant de lignes de transmission de même direction.

Au début de la transmission, les fronts de transition sont séparés, et les perturbations résiduelles (verticales et sur les seconds voisins) sont compensées. En fin de transmission, les transitions entre les lignes du premier groupe et les lignes du deuxième groupe se recouvrent, et la compensation agit alors sur les lignes voisines immédiates.

Les chronogrammes de la figure 23 illustrent l'amélioration de la compensation de bruit en utilisant en outre des pseudo-masses comme expliqué précédemment. L'utilisation de pseudo-masses améliore la diminution de la diaphonie au début de la transmission, tant que les signaux sont non recouvrants.

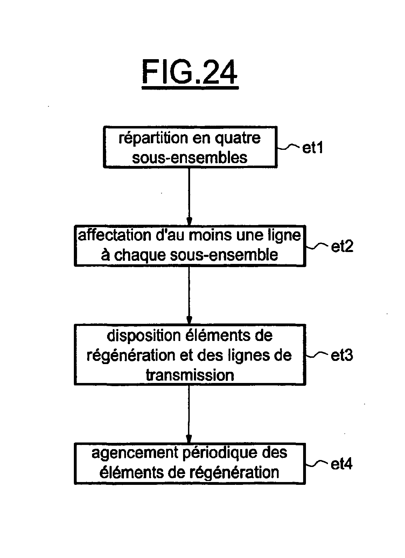

La figure 24 illustre un mode de mise en oeuvre du procédé selon un aspect de l'invention.

On répartit ledit ensemble de lignes de transmission en quatre sous-ensembles de lignes (étape et1), et on affecte au moins une ligne de transmission munie d'un agencement périodique de dits éléments de régénération inverseurs et non-inverseurs à chacun desdits sous-ensembles (étape et2).

De plus, on dispose lesdits éléments de régénération respectifs dans des plans sensiblement perpendiculaires auxdites lignes de transmission, et on dispose dans un ordre constant, à un même niveau, quatre lignes de transmission voisines appartenant respectivement à un sous-ensemble distinct parmi lesdits sous-ensembles (étape et3).

Enfin (étape et4), on agence périodiquement, sur une première ligne de transmission d'un premier desdits sous-ensembles, des éléments de régénération de signal inverseur, non-inverseur, non-inverseur, et inverseur. On agence périodiquement, sur une deuxième ligne de transmission d'un deuxième desdits sous-ensembles, des éléments de régénération de signal inverseur, inverseur, non-inverseur, et non-inverseur. On agence périodiquement, sur une troisième ligne de transmission d'un troisième desdits sous-ensembles, des éléments de régénération de signal non-inverseur, non-inverseur, inverseur, et inverseur. On agence périodiquement, sur une quatrième ligne de transmission d'un quatrième desdits sous-ensembles des éléments de régénération de signal non-inverseur, inverseur, inverseur, non-inverseur, et on aligne sensiblement lesdits premiers, deuxièmes, troisièmes et quatrièmes éléments de régénération respectifs desdits agencements périodiques.

L'invention permet de réduire la diaphonie dans un circuit intégré.

L'invention permet de minimiser, non seulement les perturbations dues aux lignes de transmission voisines immédiates, mais également les perturbations dues aux lignes de transmission deuxièmes voisines.

## Revendications

1. Système de transmission de données dans un circuit électronique, comprenant un ensemble de lignes de transmission de signal disposées sensiblement parallèlement les unes par rapport aux autres, chaque ligne de transmission comprenant des éléments de régénération de signal, inverseurs (I) et non-inverseurs (N), **caractérisé par le fait que**
ledit ensemble de lignes de transmission comprend quatre sous-ensembles de lignes (ss_ens1, ss_ens2, ss_ens3, ss_ens4),
chacun desdits sous-ensembles comprend au moins une ligne de transmission munie d'un agencement périodique de dits éléments de régénération inverseurs (I) et non-inverseurs (N),
lesdits éléments de régénération respectifs sont disposés dans des plans sensiblement perpendiculaires auxdites lignes de transmission,
quatre lignes de transmission consécutives disposées à un même niveau appartiennent respectivement à un sous-ensemble distinct parmi lesdits sous-ensembles, et sont disposées dans un ordre constant,
une première ligne de transmission d'un premier desdits sous-ensembles comprenant un agencement périodique d'éléments de régénération de signal inverseur, non-inverseur, non-inverseur, inverseur, une deuxième ligne de transmission d'un deuxième desdits sous-ensembles comprenant un agencement périodique d'éléments de régénération de signal inverseur, inverseur, non-inverseur, non-inverseur, une troisième ligne de transmission d'un troisième desdits sous-ensembles comprenant un agencement périodique d'éléments de régénération de signal non-inverseur, non-inverseur, inverseur, inverseur, et une quatrième ligne de transmission d'un quatrième desdits sous-ensembles comprenant un agencement périodique d'éléments de régénération de signal non-inverseur, inverseur, inverseur, et non-inverseur, lesdits éléments de régénération d'un agencement périodique étant sensiblement alignés.

2. Système selon la revendication 1, dans lequel deux éléments de régénération de signal successifs d'une ligne de transmission sont espacés d'une distance sensiblement constante.

3. Système selon la revendication 1 ou 2, dans lequel lesdits agencements périodiques respectifs desdites quatre lignes de transmission comprennent, en outre, au moins un ensemble d'éléments de régénération inverseurs (I) intercalés dans chaque ligne à une même position relative, lesdits éléments de régénération inverseurs (I) intercalés d'un ensemble étant sensiblement alignés (Motif3).

4. Système selon l'une quelconque des revendications 1 à 3, dans lequel ladite première ligne de transmission est voisine immédiate de ladite deuxième ligne de transmission, ladite deuxième ligne de transmission est voisine immédiate de ladite troisième ligne de transmission, et ladite troisième ligne de transmission est voisine immédiate de ladite quatrième ligne de transmission (Motif2a).

5. Système selon l'une quelconque des revendications 1 à 3, dans lequel ladite première ligne de transmission est voisine immédiate de ladite quatrième ligne de transmission, ladite quatrième ligne de transmission est voisine immédiate de ladite troisième ligne de transmission, et ladite troisième ligne de transmission est voisine immédiate de ladite deuxième ligne de transmission (Motif2b).

6. Système selon l'une quelconque des revendications 1 à 5, dans lequel deux lignes de transmission d'un même sous-ensemble, situées dans deux niveaux de métallisation consécutifs, sont décalées l'une par rapport à l'autre.

7. Système selon la revendication 6, dans lequel, lesdites première, deuxième, troisième et quatrième lignes de transmission appartenant respectivement au premier (ss_ens1), deuxième (ss_ens2), troisième (ss_ens3) et quatrième sous-ensemble (ss_ens4), et étant disposées dans un premier niveau de métallisation, sont respectivement superposées à quatre autres lignes de transmission, d'un niveau de métallisation consécutif audit premier niveau de métallisation, lesdites quatre autres lignes de transmission appartenant respectivement au troisième (ss_ens3), quatrième (ss_ens4), premier (ss_ens1) et deuxième sous-ensemble (ss_ens2).

8. Système selon la revendication 6, dans lequel, lesdites première, deuxième, troisième et quatrième lignes de transmission appartenant respectivement au premier (ss_ens1), quatrième (ss_ens4), troisième (ss_ens3) et deuxième sous-ensemble (ss_ens2), et étant disposées dans un premier niveau de métallisation, sont respectivement superposées à quatre autres lignes de transmission, d'un niveau de métallisation consécutif audit premier niveau de métallisation, lesdites quatre autres lignes de transmission appartenant respectivement au troisième (ss_ens3), deuxième (ss_ens2), premier (ss_ens1) et quatrième sous-ensemble (ss_ens4).

9. Système selon l'une quelconque des revendications 1 à 8, dans lequel les lignes de bord sont des lignes de masse (Masse).

10. Système selon l'une quelconque des revendications 1 à 9, comprenant une ligne de transmission d'un signal d'horloge (Horloge).

11. Système selon la revendication 10, comprenant des moyens de traitement adaptés pour émettre des données transmises par une ligne de transmission, différente de ladite ligne de transmission du signal d'horloge, sur un front constant dudit signal d'horloge, et adaptés pour échantillonner lesdites données sur le front constant opposé dudit signal d'horloge.

12. Système selon l'une quelconque des revendications 9 à 11, dans lequel ladite ligne de transmission du signal d'horloge est voisine immédiate d'une desdites lignes de masse.

13. Système selon la revendication 9 ou 10, comprenant des moyens de traitement adaptés pour émettre des données transmises par une ligne de transmission, différente de ladite ligne de transmission du signal d'horloge, et pour échantillonner lesdites données sur un même type de front, montant ou descendant, que le front d'émission, dans lequel ladite ligne de transmission du signal d'horloge comprend deux lignes voisines immédiates transmettant chacune un signal commandé par des moyens de commande, chacun des deux dits signaux commandés étant configuré pour commuter inversement et en phase avec ledit signal d'horloge ou pour ne pas commuter.

14. Système selon la revendication 13, dans lequel les deux dites lignes voisines immédiates ont chacune une autre ligne voisine immédiate, différente de la ligne de transmission du signal d'horloge et deuxième voisine de ladite ligne de transmission du signal d'horloge, transmettant chacune un signal statique représentatif de la valeur d'un bit de mode permettant de déterminer ledit signal commandé transmis respectivement par les lignes voisines immédiates de la ligne de transmission du signal d'horloge.

15. Système selon la revendication 13 ou 14, dans lequel les données transmises par lesdites lignes de transmission sont émises sur les fronts montants et descendants du signal d'horloge, des données émises sur un front montant du signal d'horloge étant échantillonnées sur un front montant du signal d'horloge, et des données émises sur un front descendant du signal d'horloge étant échantillonnées sur un front descendant du signal d'horloge.

16. Système selon l'une quelconque des revendications 11 à 15, dans lequel lesdits moyens de traitement sont adaptés pour émettre des données transmises respectivement par deux lignes de transmission voisines immédiates, différentes de ladite ligne de transmission du signal d'horloge, respectivement sur les fronts montants dudit signal d'horloge pour la première desdites deux lignes de transmission et sur les fronts descendants dudit signal d'horloge pour la deuxième desdites deux lignes de transmission, et adaptés pour échantillonner respectivement lesdites données sur les fronts descendants dudit signal d'horloge pour la première desdites deux lignes de transmission et sur les fronts montants dudit signal d'horloge pour la deuxième desdites deux lignes de transmission.

17. Procédé de transmission de données dans un circuit électronique, comprenant un ensemble de lignes de transmission de signal disposées sensiblement parallèlement les unes par rapport aux autres, chaque ligne de transmission comprenant des éléments de régénération de signal, inverseurs (I) et non-inverseurs (N), ledit procédé étant **caractérisé par le fait que** :
on répartit (et1) ledit ensemble de lignes de transmission en quatre sous-ensembles de lignes (ss_ens1, ss_ens2, ss_ens3, ss_ens4),
on affecte (et2) au moins une ligne de transmission munie d'un agencement périodique de dits éléments de régénération inverseurs (I) et non-inverseurs (N) à chacun desdits sous-ensembles,
on dispose (et3) lesdits éléments de régénération respectifs dans des plans sensiblement perpendiculaires auxdites lignes de transmission,
on dispose (et3) dans un ordre constant, à un même niveau, quatre lignes de transmission consécutives appartenant respectivement à un sous-ensemble distinct parmi lesdits sous-ensembles,
on agence périodiquement (et4), sur une première ligne de transmission d'un premier desdits sous-ensembles, des éléments de régénération de signal inverseur, non-inverseur, non-inverseur, inverseur, on agence périodiquement, sur une deuxième ligne de transmission d'un deuxième desdits sous-ensembles, des éléments de régénération de signal inverseur, inverseur, non-inverseur, non-inverseur, on agence périodiquement, sur une troisième ligne de transmission d'un troisième desdits sous-ensembles, des éléments de régénération de signal non-inverseur, non-inverseur, inverseur, inverseur, on agence périodiquement, sur une quatrième ligne de transmission d'un quatrième desdits sous-ensembles des éléments de régénération de signal non-inverseur, inverseur, inverseur, non-inverseur, et on aligne sensiblement lesdits éléments de régénération d'un agencement périodique.

## Claims

1. System of transmitting data in an electronic circuit, comprising a set of signal transmission lines disposed roughly in parallel to each other, each transmission line comprising inverting and non-inverting signal regeneration elements, wherein:
- said set of transmission lines comprises four subsets of lines,
- each of said subsets comprises at least one transmission line provided with a periodic arrangement of said inverting and non-inverting regeneration elements,
- said respective regeneration elements are disposed in planes roughly perpendicular to said transmission lines,
- four consecutive transmission lines disposed on the same level belong respectively to a separate subset of said subsets, and are disposed in a constant order,
- a first transmission line of a first of said subsets comprising a periodic arrangement of inverting, non-inverting, non-inverting and inverting signal regeneration elements, a second transmission line of a second of said subsets comprising a periodic arrangement of inverting, inverting, non-inverting and non-inverting signal regeneration elements, a third transmission line of a third of said subsets comprising a periodic arrangement of non-inverting, non-inverting, inverting and inverting signal regeneration elements, and a fourth transmission line of a fourth of said subsets comprising a periodic arrangement of non-inverting, inverting, inverting and non-inverting signal regeneration elements, said regeneration elements of a periodic arrangement being roughly aligned.

2. System according to Claim 1, in which two successive signal regeneration elements of a transmission line are spaced at a roughly constant distance.

3. System according to Claim 1, in which said respective periodic arrangements of said four transmission lines further comprise at least one set of inverting regeneration elements interposed in each line at the same relative position, said interposed inverting regeneration elements of a set being roughly aligned.

4. System according to Claim 1, in which said first transmission line is immediately adjacent to said second transmission line, said second transmission line is immediately adjacent to said third transmission line, and said third transmission line is immediately adjacent to said fourth transmission line.

5. System according to Claim 1, in which said first transmission line is immediately adjacent to said fourth transmission line, said fourth transmission line is immediately adjacent to said third transmission line, and said third transmission line is immediately adjacent to said second transmission line.

6. System according to Claim 1, in which two transmission lines of the same subset, situated in two consecutive metallization levels, are offset relative to each other.

7. System according to Claim 6, in which said first, second, third and fourth transmission lines respectively belonging to the first, second, third and fourth subsets, and being disposed in a first metallization level, are respectively superimposed on four other transmission lines, of a metallization level consecutive to said first metallization level, said four other transmission lines respectively belonging to the third, fourth, first and second subsets.

8. System according to Claim 6, in which said first, second, third and fourth transmission lines respectively belonging to the first, fourth, third and second subsets, and being disposed in a first metallization level, are respectively superimposed on four other transmission lines, of a metallization level consecutive to said first metallization level, said four other transmission lines respectively belonging to the third, second, first and fourth subsets.

9. System according to Claim 1, in which the edge lines are ground lines.

10. System according to Claim 1, comprising a clock signal transmission line.

11. System according to Claim 10, comprising processing means for sending data transmitted via a transmission line, different from said clock signal transmission line, on a constant edge of said clock signal, and for sampling said data on the opposite constant edge of said clock signal.

12. System according to Claim 9, in which said clock signal transmission line is immediately adjacent to one of said ground lines.

13. System according to Claim 9, comprising processing means for sending data transmitted via a transmission line, different from said clock signal transmission line, and for sampling said data on the same type of edge, rising or falling, as the transmit edge, in which said clock signal transmission line comprises two immediately adjacent lines each transmitting a signal controlled by control means, each of the two said controlled signals being configured to switch inversely and in phase with said clock signal or not to switch.

14. System according to Claim 13, in which the two said immediately adjacent lines each have another immediately adjacent line, different from the clock signal transmission line and second adjacent to said clock signal transmission line, each transmitting a steady-state signal representative of the value of a mode bit used to determine said controlled signal transmitted respectively by the immediately adjacent lines of the clock signal transmission line.

15. System according to Claim 13, in which the data transmitted by said transmission lines is sent on the rising and falling edges of the clock signal, data sent on a rising edge of the clock signal being sampled on a rising edge of the clock signal, and data sent on a falling edge of the clock signal being sampled on a falling edge of the clock signal.

16. System according to Claim 11, in which said processing means are designed to send data transmitted respectively by two immediately adjacent transmission lines, different from said clock signal transmission line, respectively on the rising edges of said clock signal for the first of said two transmission lines and on the falling edges of said clock signal for the second of said two transmission lines, and designed to respectively sample said data on the falling edges of said clock signal for the first of said two transmission lines and on the rising edges of said clock signal for the second of said two transmission lines.

17. Method of transmitting data in an electronic circuit, comprising a set of signal transmission lines disposed roughly parallel to each other, each transmission line comprising inverting and non-inverting signal regeneration elements, wherein:
said set of transmission lines is divided into four subsets of lines,
at least one transmission line provided with a periodic arrangement of said inverting and non-inverting regeneration elements is assigned to each of said subsets,
said respective regeneration elements are disposed in planes roughly perpendicular to said transmission lines,
four consecutive transmission lines respectively belonging to a separate subset of said subsets are disposed in a constant order, at the same level, inverting, non-inverting, non-inverting and inverting signal regeneration elements are arranged periodically on a first transmission line of a first of said subsets, inverting, inverting, non-inverting and non-inverting signal regeneration elements are arranged periodically on a second transmission line of a second of said subsets, non-inverting, non-inverting, inverting and inverting signal regeneration elements are arranged periodically on a third transmission line of a third of said subsets, non-inverting, inverting, inverting and non-inverting signal regeneration elements are arranged periodically on a fourth transmission line of a fourth of said subsets, and said regeneration elements of a periodic arrangement are roughly aligned.

## Patentansprüche

1. Datenübertragungssystem in einer elektronischen Schaltung, mit einer Gruppe von im Wesentlichen in Bezug zueinander parallel angeordneten Signalübertragungsleitungen, wobei jede Übertragungsleitung invertierende (I) und nicht invertierende (N) Signalregenerationselemente aufweist, **dadurch gekennzeichnet, dass**
die Gruppe von Übertragungsleitungen vier Untergruppen von Leitungen (ss_ens1, ss_ens2, ss_ens3, ss_ens4) enthält,
jede der Untergruppen wenigstens eine Übertragungsleitung enthält, die mit einer periodischen Anordnung der invertierenden und nicht invertierenden (N) Regenerationselemente (I) versehen ist,
die jeweiligen Regenerationselemente in Ebenen angeordnet sind, die im Wesentlichen senkrecht zu den Übertragungsleitungen verlaufen,
vier aufeinander folgende, auf derselben Ebene angeordnete Übertragungsleitungen jeweils zu einer eigenen Untergruppe unter den Untergruppen gehören und in einer gleichbleibenden Reihenfolge angeordnet sind,
wobei eine erste Übertragungsleitung einer ersten der Untergruppen eine periodische Anordnung aus einem invertierenden, nicht invertierenden, nicht invertierenden, invertierenden Signalregenerationselement aufweist, eine zweite Übertragungsleitung einer zweiten der Untergruppen eine periodische Anordnung von einem invertierenden, invertierenden, nicht invertierenden, nicht invertierenden Signalregenerationselement aufweist, eine dritte Übertragungsleitung einer dritten der Untergruppen eine periodische Anordnung aus einem nicht invertierenden, nicht invertierenden, invertierenden, invertierenden Signalregenerationselement aufweist und eine vierte Übertragungsleitung einer vierten der Untergruppen eine periodische Anordnung aus einem nicht invertierenden, invertierenden, invertierenden und nicht invertierenden Signalregenerationselement aufweist, wobei die Regenerationselemente einer periodischen Anordnung im Wesentlichen aneinander gereiht sind.

2. System nach Anspruch 1, in dem zwei aufeinander folgende Signalregenerationselemente einer Übertragungsleitung im Wesentlichen gleichmäßig voneinander beabstandet angeordnet sind.

3. System nach Anspruch 1 oder 2, in dem die jeweiligen periodischen Anordnungen der vier Übertragungsleitungen außerdem wenigstens eine Gruppe von invertierenden Regenerationselementen (I) enthalten, die in jeder Leitung an einer übereinstimmenden relativen Position eingefügt sind, wobei die eingefügten invertierenden Regenerationselemente (I) einer Gruppe im Wesentlichen fluchtend ausgerichtet sind (Muster3).

4. System nach einem der Ansprüche 1 bis 3, in dem die erste Übertragungsleitung unmittelbar benachbart zu der zweiten Übertragungsleitung ist, wobei die zweite Übertragungsleitung unmittelbar benachbart zu der dritten Übertragungsleitung ist, und die dritte Übertragungsleitung unmittelbar benachbart zu der vierten Übertragungsleitung ist (Muster2a).

5. System nach einem der Ansprüche 1 bis 3, in dem die erste Übertragungsleitung unmittelbar benachbart zu der vierten Übertragungsleitung ist, wobei die vierte Übertragungsleitung unmittelbar benachbart zu der dritten Übertragungsleitung ist und die dritte Übertragungsleitung unmittelbar benachbart zu der zweiten Übertragungsleitung ist (Muster2b).

6. System nach einem der Ansprüche 1 bis 5, in dem zwei in zwei aufeinander folgenden Metallisierungsebenen angeordnete Übertragungsleitungen ein und derselben Untergruppe gegeneinander versetzt sind.

7. System nach Anspruch 6, in dem die erste, zweite, dritte und vierte Übertragungsleitungsleitung, die jeweils zu der ersten (ss_ens1), zweiten (ss_ens2), dritten (ss_ens3) und vierten (ss_ens4) Untergruppe gehören und in einer ersten Metallisierungsebene angeordnet sind, jeweils vier anderen Übertragungsleitungen einer Metallisierungsebene überlagert sind, die auf die erste Metallisierungsebene folgt, wobei die vier anderen Übertragungsleitungen jeweils zu der dritten (ss_ens3), vierten (ss_ens4), ersten (ss_ens1) und zweiten (ss_ens2) Untergruppe gehören.

8. System nach Anspruch 6, in dem die erste, zweite, dritte und vierte Übertragungsleitung, die jeweils zu der ersten (ss_ens1), vierten (ss_ens4), dritten (ss_ens3) und zweiten (ss_ens2) Untergruppe gehören und in einer ersten Metallisierungsebene angeordnet sind, jeweils vier anderen Übertragungsleitungen einer Metallisierungsebene überlagert sind, die auf die erste Metallisierungsebene folgt, wobei die vier anderen Übertragungsleitungen jeweils zu der dritten (ss_ens3), zweiten (ss_ens2), ersten (ss_ens1) und vierten (ss_ens4) Untergruppe gehören.

9. System nach einem der Ansprüche 1 bis 8, in dem die Randleitungen Masseleitungen (Masse) sind.

10. System nach einem der Ansprüche 1 bis 9, zu dem eine Übertragungsleitung für ein Taktsignal (Takt) gehört.

11. System nach Anspruch 10, zu dem Verarbeitungsmittel gehören, die derart eingerichtet sind, dass sie über eine sich von der Taktsignalübertragungsleitung unterscheidende Übertragungsleitung übertragene Daten auf einer konstanten Anstiegsflanke des Taktsignals entsenden, und die derart eingerichtet sind, dass sie die Daten auf der entgegengesetzten konstanten Flanke des Taktsignals abtasten.

12. System nach einem der Ansprüche 9 bis 11, wobei die Taktsignalübertragungsleitung unmittelbar benachbart zu einer der Masseleitungen ist.

13. System nach Anspruch 9 oder 10, mit Verarbeitungsmitteln, die derart ausgeführt sind, dass sie Übertragungsdaten über eine sich von der Taktsignalübertragungsleitung unterscheidende Übertragungsleitung entsenden, und die Daten auf einer Flanke einer übereinstimmenden Art wie bei der Sendeflanke, sei diese ansteigend oder absteigend, abtasten, und in dem die Taktsignalübertragungsleitung zwei unmittelbar benachbarte Leitungen enthält, die jeweils ein durch Steuermittel gesteuertes Signal übertragen, wobei jedes dieser beiden Steuerungssignale dazu eingerichtet ist, mit dem Taktsignal invers und in Phase umzuschalten oder nicht umzuschalten.

14. System nach Anspruch 13, in dem die beiden unmittelbar benachbarten Leitungen jeweils eine andere unmittelbar benachbarte Leitung aufweisen, die sich von der Taktsignalübertragungsleitung unterscheidet und eine zweite benachbarte Leitung der Taktsignalübertragungsleitung ist, die jeweils ein statisches Signal übertragen, das den Wert eines Modusbits kennzeichnet, das es erlaubt, das Steuerungssignal zu bestimmen, das jeweils durch die unmittelbar benachbarten Leitungen der Taktsignalübertragungsleitung übertragen wurde.

15. System nach Anspruch 13 oder 14, in dem die über die Übertragungsleitungen übertragenen Daten an den Anstiegs- und Abstiegsflanken des Taktsignals gesendet werden, wobei auf einer Anstiegsflanke des Taktsignals gesendete Daten auf einer Anstiegsflanke des Taktsignals abgetastet werden und wobei auf einer Abstiegsflanke des Taktsignals gesendete Daten auf einer Abstiegsflanke des Taktsignals abgetastet werden.

16. System nach einem der Ansprüche 11 bis 15, in dem die Verarbeitungsmittel dazu eingerichtet sind, Übertragungsdaten jeweils über zwei sich von der Taktsignalübertragungsleitung unterscheidende, unmittelbar benachbarte Übertragungsleitungen jeweils an den Anstiegsflanken des Taktsignals für die erste der zwei Übertragungsleitungen bzw. an den Abstiegsflanken des Taktsignals für die zweite der zwei Übertragungsleitungen zu entsenden, und sie dazu eingerichtet sind, die Daten jeweils an den Abstiegsflanken des Taktsignals für die erste der beiden Übertragungsleitungen bzw. an den Anstiegsflanken des Taktsignals für die zweite der beiden Übertragungsleitungen abzutasten.

17. Verfahren zur Übertragung von Daten in einer elektronischen Schaltung mit einer Gruppe von im Wesentlichen in Bezug zueinander parallel angeordneten Signalübertragungsleitung, wobei jede Übertragungsleitung invertierende (I) und nicht invertierende (N) Signalregenerationselemente aufweist, wobei das Verfahren durch die Schritte **gekennzeichnet** ist, so dass:
die Gruppe von Übertragungsleitungen in vier Untergruppen von Leitungen (ss_ens1, ss_ens2, ss_ens3, ss_ens4) unterteilt wird (Schritt1),
jeder der Untergruppen wenigstens eine Übertragungsleitung zugeordnet wird, die mit einer periodischen Anordnung der invertierenden (I) und nicht invertierenden (N) Regenerationselemente versehen ist (Schritt2),
die jeweiligen Regenerationselemente in Ebenen angeordnet werden, die im Wesentlichen senkrecht zu den Übertragungsleitungen verlaufen (Schritt3),
vier aufeinander folgende Übertragungsleitungen, die jeweils zu einer eigenen Untergruppe unter den Untergruppen gehören, in einer gleichbleibenden Reihenfolge auf ein und derselben Ebene angeordnet werden (Schritt3),
auf einer ersten Übertragungsleitung einer ersten der Untergruppen invertierende, nicht invertierende, nicht invertierende, invertierende Signalregenerationselemente periodisch angeordnet werden, auf einer zweiten Übertragungsleitung einer zweiten der Untergruppen invertierende, invertierende, nicht invertierende, nicht invertierende Signalregenerationselemente periodisch angeordnet werden, auf einer dritten Übertragungsleitung einer dritten der Untergruppen nicht invertierende, nicht invertierende, invertierende, invertierende Signalregenerationselemente periodisch angeordnet werden, auf einer vierten Übertragungsleitung einer vierten der Untergruppen nicht invertierende, invertierende, invertierende, nicht invertierende Signalregenerationselemente periodisch angeordnet werden, und die Regenerationselemente einer periodischen Anordnung im Wesentlichen aneinander gereiht werden (Schritt4).
